# EUROPEAN PATENT SPECIFICATION

(11) **EP 3 953 269 B1**
(45) Date of publication and mention of the grant of the patent: **26.06.2024**
(21) Application number: 20788145.9
(22) Date of filing: 08.04.2020
(51) Int. Cl.: B65D 65/38, B32B 29/00, C09D 101/00, C09D 103/00, C09D 105/00, D21H 27/06

(54) **SEALED PACKAGE COMPRISING PARCHMENT PAPER AND A POLYSACCHARIDE-BASED COATING**
VERSIEGELTE VERPACKUNG MIT PERGAMENTPAPIER UND EINER BESCHICHTUNG AUF POLYSACCHARIDBASIS
EMBALLAGE ÉTANCHE COMPRENANT DU PAPIER SULFURISÉ ET UN REVÊTEMENT À BASE DE POLYSACCHARIDE

(30) Priority: 12.04.2019 SE 1930122
(43) Date of publication of application: 16.02.2022
(73) Proprietor: Fernandi Innovation AB, 593 93 Västervik (SE)
(72) Inventor: FERNANDI, Carl-Henrik, 59353 Västervik (SE)
(74) Representative: Groth & Co. KB
(86) International application number: PCT/SE2020/050370
(87) International publication number: WO 2020/209781

(56) References cited:
- WO-A1-96/31303
- WO-A1-98/41454
- WO-A1-99/44909
- WO-A1-2015/153542
- WO-A1-2016/175421
- WO-A1-2017/157666
- CN-A- 101 797 999
- CN-A- 107 620 226
- CN-A- 108 130 802
- GB-A- 2 502 241
- JP-A- 2018 053 374
- US-A- 1 459 523
- US-A- 5 994 685
- "Biodolomer® F30", GAIA BioMaterials AB V1.6, August 2018 (2018-08), XP055748292, Retrieved from the Internet: URL:https://piloterne.dk/media/Biodolomer_ F30.pdf [retrieved on 2020-06-04]
- Anonymous: "Bio-seal: developments in biocoating technology", Food packages, vol. 5, no. 26, 1 March 2009 (2009-03-01), pages 16-19, XP009531124, Varese, IT ISSN: 1827-2533

## Description

The present invention relates to a sealed package, a method of manufacturing the package and the use thereof.

### Background of the invention

Paper-based packages are well-known in the art. Such packages are conventionally composed of laminated layers of paper, paperboard, barriers, aluminium foils, plastic films etc. Such packages may be used in a great deal of applications including storage of foods. However, such packages suffer from difficulties to recycle the layers thereof in a sustainable way. Packages are thus many times disposed of as a poorly recycled waste.

The present invention intends to provide a recyclable package which does not compromise with the quality and functionality thereof. The present invention thus aims to provide a high performance package with long term storage and low penetrability of for example fatty and/or aqueous compositions. A further object is to provide a recyclable package which can be manufactured from only fossil free products and substances. A further object is to provide a package which ascertains substantially no harmful or toxic substances migrate to solid or liquid foods contained therein. A further object of the invention is to provide packages which allows for transportation thereof where the packages can be disposed in a space-efficient way to optimize efficient transportation in as small containers as possible when shipped from supplier to end users or distributors etc. In particular, one objective of the invention is to provide a package which optimizes the storage volume by minimizing the size of the package per se, e.g. by omitting relatively thick overlapping edges which are unfolded and torn away as the package is opened. A further object of the invention is to provide a good oxygen barrier to the package, especially for dry and/or fatty foods. A further object of the invention is to extend the lifetime of the package and protect possible bio-based binder comprised in the package.

### The invention

The present invention relates to a sealed package for food comprising
i) a first parchment paper sealing and forming a volume for storage of food
ii) a polysaccharide-based composition coated
   ii.a) on one side of said first parchment paper; or
   ii.b) on a bio-based binder coating which is coated directly on one side of said first parchment paper, the bio-based binder coating comprising latex, wax, polylactic acid modified polyester, derivatives and/or mixtures thereof,

wherein the polysaccharide-based composition comprises hemicellulose, microfibrillar cellulose, nanofibrillar cellulose, or mixtures thereof,
wherein the polysaccharide-based composition coating has a thickness ranging from 1 to 20 µm, and
wherein the polysaccharide-based composition is coated on the side of the package facing away from the formed volume.

For reasons of clarity, the above defined sealed package will in the following also be referred to as an inner package.

According to one embodiment, the polysaccharide-based composition comprises a bio-based binder. The polysaccharide-based composition may comprise a bio-based binder when coated directly on the first parchment paper and/or when coated on a bio-based binder coating.

According to one embodiment, the polysaccharide-based composition solely comprises a polysaccharide or a mixture of polysaccharides. Preferably, the polysaccharide is coated solely without any further components directly on the first parchment paper.

According to one embodiment, a bio-based binder may be coated on the coating of the polysaccharide-based composition, i.e. once the polysaccharide-based coating has been coated and adhered to the first parchment paper. This protects the polysaccharide-based composition from becoming dissolved which may be due to impact and/or migration of any aqueous or water-containing components outside the bio-based binder.

According to one embodiment, the first parchment paper is not coated on the side facing the sealed volume when the first parchment paper is in direct contact with the formed volume, which may contain food. This entails of course that no or a minimized amount of substance of a coating can migrate and/or dissolve in food stored in the package when the side facing the sealed volume is in direct contact with the food.

According to one embodiment, the first parchment paper is pre-impregnated by for example a sizing agent selected from a resin and/or a rosin. This impregnation is suitably effected to reduce the penetrability through the parchment paper and minimize the migration of compounds from the parchment paper.

According to one embodiment, the thickness of said first parchment paper, and preferably of any further parchment paper such as a second parchment paper, ranges from 20 to 100, preferably from 35 to 80, such as from 40 to 70 µm. Preferably, the grammage (surface weight) of any uncoated parchment paper such as said first or second or further parchment paper ranges from 20 to 100, more preferably from 35 to 80, such as from 40 to 70 g/m². Preferably, the grease resistance of the parchment paper ranges from 1200 to 2000, such as from 1500 to 1900 seconds in accordance with the test method Tappi 454. Suitable parchment papers may be selected from e.g. Super Perga WS Opaque Parchment, Candor FA/FL, or Foodwrap papers available from Nordic Paper.

According to one embodiment, the polysaccharide-based composition is coated on a bio-based binder coating which previously has been coated on the side of the first parchment paper facing away from the sealed volume.

According to one embodiment, a second parchment paper coated with a bio-based binder is laminated to the first parchment paper on the side of the package closest to the formed volume, wherein the bio-based binder coating is disposed between the first and the second parchment papers. The second parchment paper will thus be closest to the sealed volume according to this embodiment.

According to one embodiment, a bio-based binder is coated on the first parchment paper on the side facing towards the sealed volume and on a side of a second parchment paper facing away from the sealed volume, wherein the second parchment paper is disposed closest to the sealed volume. The package according to this embodiment thus comprises in the mentioned order a second parchment paper closest to the sealed volume, a bio-based binder coating and the first parchment paper. Preferably, the first and the second parchment papers are laminated to one another with the bio-based binder coating in between. Preferably, the second parchment paper is not coated on the side facing the sealed volume, i.e. the volume for storage of food which a coating facing the enclosed volume would be in contact with. In this embodiment, said bio-based binder is thus disposed between the first and the second parchment papers and may function as a water barrier for both the first parchment paper and the polysaccharide-based composition coated on the side of the first parchment paper facing away from the sealed volume. The coating of the polysaccharide-based composition will thus be further protected by the second parchment paper whereby its functionality as e.g. oxygen barrier can be further maintained.

According to one embodiment, a second parchment paper is coated with a polysaccharide-based composition, and a bio-based binder is coated on said polysaccharide-based composition coating, wherein said second parchment paper being closest to the formed volume is laminated to the first parchment paper, wherein the coating of the polysaccharide-based composition and the bio-based binder coating are disposed between the first and the second parchment papers.

According to one embodiment, the first and any further parchment paper is free from silicone-based and/or fluorine-based compounds.

According to one embodiment, the polysaccharide-based composition comprises microfibrillar and/or nanofibrillar polysaccharide, preferably microfibrillar and/or nanofibrillar cellulose.

According to one embodiment, the polysaccharide-based composition comprises a hemicellulose, for example a pentosan-rich polysaccharide which may include inter alia xylans, glucomannan, galactoglucomannan, arabinogalactan or mixtures thereof which may be present in an amount from about 20 wt% up to 75 wt% or 80 wt% or 100 wt%. According to one embodiment, the polysaccharide-based composition comprises a polysaccharide containing pentosan and/or xylose in an amount from about 20 wt% up to about 75 wt% or 80 wt% or 100 wt%. According to one embodiment, the polysaccharide-based composition comprising at least one polysaccharide, in particular hemicellulose, has a molecular weight from 8000 to 50000 g/mol, for example from 8000 to 48000 g/mol or from 8000 to 45000 g/mol, e.g. from 15000 to 45000 g/mol or 20000 to 40000 g/mol. The use of somewhat higher molecular weights may improve the capability and adherence of the coating of a polysaccharide-based composition which may comprise inter alia hemicellulose. If even higher molecular weights are used, high viscosity can complicate the use of the hemicellulose to produce a coating. The molecular weight of a polysaccharide-based composition comprising at least one polysaccharide such as a hemicellulose may also range from 8000 to 15 000 g/mol, for example 8000 to 14000 g/mol. The use of low molecular weights may be an advantage as hemicellulose from many sources can be used and the extraction procedure therefrom is simplified.

According to one embodiment, the polysaccharide-based composition comprises a microfibrillar and/or nanofibrillar polysaccharide, preferably microfibrillar and/or nanofibrillar cellulose. Sources of cellulose for the preparation of microfibrillar and/or nanofibrillar cellulose include the following: (a) wood fibers, e.g. derived from hardwood and softwood, such as from chemical pulps, mechanical pulps, thermal mechanical pulps, chemical-thermal mechanical pulps, recycled fibers, (b) seed fibers, such as from cotton; (c) seed hull fiber, such as from soybean hulls, pea hulls, corn hulls; (d) bast fibers, such as from flax, hemp, jute, ramie, kenaf, (e) leaf fibers, such as from manila hemp, sisal hemp; (f) stalk or straw fibers, such as from bagasse, corn, wheat; (g) grass fibers, such as from bamboo; (h) cellulose fibers from algae, such as velonia; (i) bacteria or fungi; and (j) parenchymal cells, such as from vegetables and fruits, and in particular sugar beets, and citrus fruits such as lemons, limes, oranges, grapefruits. Microcrystalline forms of these cellulose materials may also be used. Cellulose sources include (1) purified, optionally bleached, wood pulps produced from sulfite, kraft (sulfate), or prehydrolyzed kraft pulping processes and (2) purified cotton linters. The source of the cellulose is not limiting, and any source may be used including synthetic cellulose or cellulose analogs. According to one embodiment, the microfibrillar and/or nanofibrillar polysaccharide such as microfibrillar and/or nanofibrillar cellulose is derived from hardwood and/or softwood.

According to one embodiment, the microfibrillar or nanofibrillar polysaccharide has an arithmetic fiber length from about 0.05 to about 0.5, for example from about 0.1 to about 0.4, or from about 0.15 to about 0.3 mm.

According to one embodiment, the surface area of the polysaccharide such as the microfibrillar or nanofibrillar cellulose is in the range from 1 to 100 g/m², preferably from 10 to 80 g/m².

According to one embodiment, the microfibrils or nanofibrils of the polysaccharide, such as microfibrillar or nanofibrillar cellulose range in diameter from about 5 to about 100 nm, preferably from about 25 to about 35 nm.

According to one embodiment, the microfibrillar and/or nanofibrillar polysaccharide, e.g. microfibrillar and/or nanofibrillar cellulose, is modified e.g. by means of grafting, cross-linking, chemical oxidation, for example by use of hydrogen peroxide. The polysaccharide may have further properties as disclosed in WO 2009/153225.

According to one embodiment, a bio-based binder may be derived from an aqueous emulsion comprising biopolymers, e.g. modified biopolymers and preferably natural plant compounds. Preferably, the bio-based binder is hydrophobic. Preferably, the bio-based binder is cationic. Preferably, the bio-based coating comprises at least 20 wt%, such as at least 40 wt% or at least 60 wt% of latex, wax, polyester-based derivatives such as polylactic acid modified polyester, and/or mixtures thereof. By the term latex and wax are also included solidified coatings derived from dispersions and emulsions of latex and wax.

According to one embodiment, the bio-based binder coating may be prepared from a polymer dispersion or emulsion preferably containing at least one species of latex and/or wax and/or polyester derivative. A coating may thus be obtained after applying and drying such dispersion and/or emulsion of latex and/or wax or polyester derivative on the first parchment paper or optionally on any other coating and/or parchment paper. The polymer dispersion is preferably a renewable material or composed of at least 30 wt% renewable material. Suitable latex species can be derived from e.g. a styrene-butadiene rubber (SBR) latex polymer dispersion which may have a particle size in the range from 0.1 to 0.3 µm. According to one embodiment,a wax used according to the present invention includes lipids, preferably selected from esters of a long-chain alcohol comprising about 12 to 32 carbon atoms and a fatty acid. Such waxes can be found in nature as coatings on leaves and stems of plants, preventing the plant from losing excessive amounts of water. According to one embodiment, the bio-based binder coating comprises latex, wax, polylactic acid modified polyester, or derivatives and/or mixtures thereof, preferably polylactic acid modified polyester. Of natural reasons, any dispersion or emulsions of any bio-based binder have been priorly dried before the coating is formed.

Suitably, the molecular weight of the bio-based binder ranges from 50 to 1500, for example 100 to 900, for example 150 to 700, or most preferably from 220 to 600 g/mole. According to one embodiment, the viscosity of the bio-based binder is in the range from 50 to 700 mPas, more preferably from 100 to 500 mPas. Preferably, the melting point of the bio-based binder is in the range from 70 to 95 °C, for example from 80 to 90 °C.

According to one embodiment, the dry content of any polymer dispersion being the precursor of the forming bio-based binder coating is in the range of 10 to 50 wt%, preferably 30 to 40 wt%.

Preferably, the density of the bio-based binder coating is in the range from 0.7 to 1.3, more preferably from 0.9 to 1.1 g/cm³.

According to one embodiment, the bio-based binder comprises a polylactic acid modified polyester, such as an aliphatic-aromatic polyester or copolyester. Preferably the polyester or copolyester is modified by a polylactide such as a polylactide acid and a filler as additive, preferably calcium carbonate. Examples of such bio-based binders involve a commercially available Biodolomer^{®}. Preferably, the density of the modified polyester is 1.2 to 1.5, more preferably from 1.27 to 1.42 g/cm³. Preferably, the modified polyester appearing in granular form is adhered to parchment paper and/or a coating of polysaccharide-based composition by heating the polyester derivative or modified polyester whereby it will stick to the contact surface such as the parchment paper. Preferably, an inorganic filler such as calcium carbonate is present in the bio-based binder in conjunction with the bio-based binder such as a polylactic acid modified polyester in an amount of 5 to 60 wt% based on the total weight of the bio-based binder composition.

According to one embodiment, the bio-based binder is coated directly on the first parchment paper and/or on the coating of the polysaccharide-based composition.

Preferably, the first parchment paper coated according to any embodiment of the invention as described herein, is suitably folded to form a sealed volume, preferably by utilizing adhesive properties available in the polysaccharide-based composition to seal edges such as neighbouring edges of a folded first parchment paper to thus form a sealed package enclosing a volume for storage of food. Preferably, if further parchment papers are comprised such as a second parchment paper, such parchment papers are laminated to the first or additional parchment paper and the whole structure of parchment papers is folded to form the enclosed volume.

Preferably, parchment paper is prepared by running sheets of paper pulp through a bath of sulfuric acid or zinc chloride. This process partially dissolves or gelatinizes the paper. This treatment forms a sulfurized cross-linked material, with high density, stability, and heat resistance, as well as low surface energy thereby imparting good non-stick or release properties.

Preferably, the polysaccharide-based composition coating has a thickness ranging from 1 to 20 µm, most preferably from 3 to 15 µm or 5 to 15 µm. Preferably, the surface weight of the polysaccharide-based composition coating is in the range from 1 to 20, such as from 3 to 15, for example from 5 to 15 g/m².

According to one embodiment, the polysaccharide-based composition does not comprise carboxymethyl cellulose, starch, or hydroxyethyl cellulose.

Preferably, the bio-based binder coating has a thickness ranging from 1 to 80, for example 1 to 70, more preferably 5 to 50, such as 7 to 35 µm. According to one embodiment, the thickness of the bio-based binder coating ranges from 10 to 50, such as from 20 to 40, or 25 to 35 µm.

Preferably, the surface weight of the bio-based binder is in the range from 1 to 100, for example 1 to 80, for example from 5 to 50 g/m². According to one embodiment, the surface weight of the bio-based binder ranges from 20 to 50, for example 30 to 50, or 35 to 50 g/m².

Preferably, the particle size of the bio-based binder is in the range from 0.1 to 500 µm, more preferably from 0.1 to 100 µm.

A bio-based binder coating disposed between the first parchment paper and the polysaccharide-based composition coating may allow longer exposure time to food of a certain water and/or fat content before the polysaccharide-based coating is eventually dissolved.

In view of bio-based binders, it has been noted packages containing wet foods having a water content of at least 15 wt%, such as at least 20 wt% and up to about 100 wt%, preferably 20 wt% to about 90 % preserve the polysaccharide-based composition coating for a longer period of time than in the absence of bio-based binders.

The term "polyethylene", equivalent to "polyethene", covers a broad range of grades. Polyethylene is classified by its density and branching. Its mechanical properties depend significantly on variables such as the extent and type of branching, the crystal structure, and the molecular weight. Preferably, LDPE (low-density polyethylene) or HDPE (high-density polyethylene) are used, most preferably HDPE such as bio-based HDPE, e.g. HDPE produced from sugar canes (fossil free).

According to one embodiment, a polyethylene-based and/or a bio-based extrudable polymer, such as a polylactic acid modified polyester, forms an outer package enclosing the inner package as described herein.

Preferably, edges of the polyethylene material and/or bio-based extrudable polymer such as polylactic acid modified polyester are welded together to form a sealed package around the inner package. The thus formed package will thus comprise both the sealed inner package and the surrounding sealed polyethylene-based and/or e.g. polylactic acid modified polyester-based package.

According to one embodiment, the polyethylene-based package and/or bio-based extrudable polymer package, such as polylactic acid modified polyester package, also referred to as an outer package herein, is tightly sealed and/or laminated with the inner package. Preferably, however, the inner and outer packages are contacted to each other without being laminated or in any other way being non-releasable from one another.

According to one embodiment, a gap remains between the inner and outer packages after having assembled them. The gap may contain air or is vacuumized.

Once produced and when opening the inner package or the package composed of both the inner and outer packages, a cut is made to unseal the package(s) simultaneously to form a suitably sized opening. The inner and outer layers can easily and readily be separated from one another after having emptied the food of the package thereby allowing for swift and efficient recycling thereof. Paper is disposed of separately and e.g. polylactic acid modified polyester and/or polyethylene is disposed of separately since these layers are preferably not unseparably laminated. The inner portion of the package may be drawn off from the opening and thus separated from the enveloping polyethylene and/or e.g. a polylactic acid modified polyester layer which then may be disposed of separately.

The outer package comprising polyethylene and/or e.g. polylactic acid modified polyester layer protects the inner package from moisture present in the surrounding environment. The polyethylene and/or e.g. polylactic acid modified polyester layer also prevents portions of the food content, especially if stored for a long period of time, from penetrating the entire package. The polyethylene and/or e.g. polylactic acid modified polyester layer thus plays a double function in that it prevents migration of moisture and/or water from either side of the package. According to one embodiment, the thickness of the polyethylene and/or polylactic acid modified polyester layer ranges from 0.01 to 1 mm, preferably from 0.05 to 0.8 mm, such as from 0.1 to 0.5 mm.

The coated first parchment paper (and possible additional parchment paper) has a double function with respect to migration. It may prevent migration out from the enclosed volume as well as prevent migration into the enclosed volume, e.g. monomer, oligomer, and polymers originating from the outer package of polyethylene and/or polylactic acid modified polyester layer. Also, the coated polysaccharide-based composition on the parchment paper provides additional blockage of monomers, oligomers, and polymers from migrating.

According to one embodiment, the inner package is formed by folding the coated parchment paper to form a volume of e.g. a pentagon such that the edges of the folded sides, preferably neighbouring sides, of the coated parchment paper are sealed by overlapping ends of the edges thereby forming a sealed package. Preferably, the edges of the foldable paper sides are provided with flaps, e.g. flaps extending along the full length of an edge which is to be sealed with a neighbouring side. The overlapping ends of an edge may thus be sealed either on the outer surface or inner surface of a neighbouring edge. Preferably, the polysaccharide-based composition when still exhibiting adhesive properties is used as an adhesive to seal edges of the coated parchment paper. If the polysaccharide-based composition has recently been coated on the first parchment paper, it may suffice to contact edges coated with the polysaccharide-based composition which will create sealing joint between the edges. If a certain time has passed since the polysaccharide-based composition had been coated on the parchment paper, and the polysaccharide-based composition does not show sufficient adhering properties, it may be necessary to heat the sealing edges to render the polysaccharide-based composition sufficiently adhering.

According to one embodiment, the outer portion of the package is formed by folding the polyethylene layer and/or polylactic acid modified polyester layer in the same way as the inner portion of the package such that the polyethylene and/or polylactic acid modified polyester layer tightly covers the inner portion of the package and is in contact therewith. Preferably, the edges of the polyethylene and/or polylactic acid modified polyester layer subsequent to folding are sealed by welding the edges together whereby a sealed package is obtained. According to one embodiment, the polyethylene and/or polylactic acid modified polyester package is folded and welded to form a tight seal against the inner package.

Preferably, by forming a package as a pentagon, the food contained therein can easily be emptied by pressing out the final content thereof. Thus, the final remainder may be more easily pressed out of the package from such pentagon-shape compared to e.g. a cube-shaped package and less food will be unnecessarily disposed.

The manufactured packages may by placing them in a space-efficient way, e.g. by loading pentagon-shaped packages on top of each other, thus forming a box or a rectangular cuboid. The packages may thus fill up the whole volume of e.g. a wellboard package which in turn may be disposed on pallets for shipment thereof. The invention also relates to a method of forming a sealed package, wherein the first parchment paper is coated on one side with a polysaccharide-based composition and optionally a bio-based binder comprising latex, wax, polylactic acid modified polyester, derivatives and/or mixtures thereof, said method comprising folding the first parchment paper to form an enclosed volume, utilizing adhesive properties of the polysaccharide-based composition to seal edges of the neighbouring folded sides of said at least first parchment paper to form the sealed package enclosing a volume for food, wherein the polysaccharide-based composition comprises hemicellulose, microfibrillar cellulose, nanofibrillar cellulose, or mixtures thereof, and wherein the polysaccharide-based composition coating has a thickness ranging from 1 to 20 µm.

The invention also relates to the use of a sealed package for food having a water content higher than 1 wt% such as higher than 5 wt% and lower than 20 wt%, e.g. lower than 10 wt%.

The invention also relates to the use of a sealed package for food having a water content of at least 25 wt%, such as at least 40 wt% or at least 60 wt% and a water content lower than 50 wt%, or lower than 70 wt% or lower than 90 wt%.

The invention also relates to the use of a package for food having a fat content in the range from 1 to 100 wt%, such as 40 to 100 wt% or from 20 to 80 wt% or 40 to 60 wt%.

### Brief description of the drawings

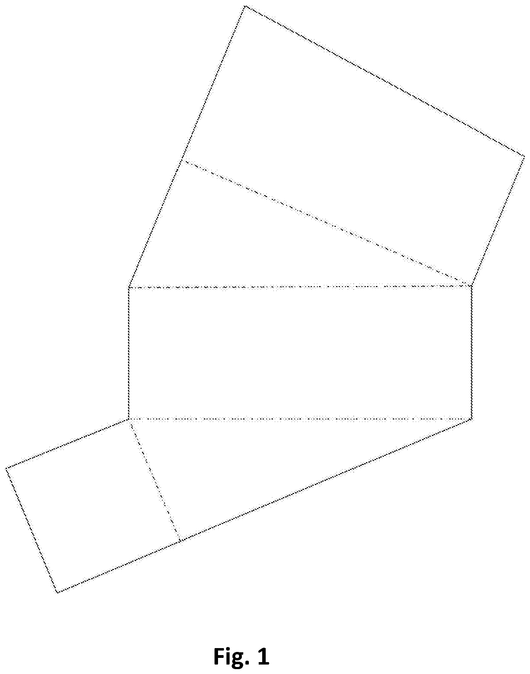

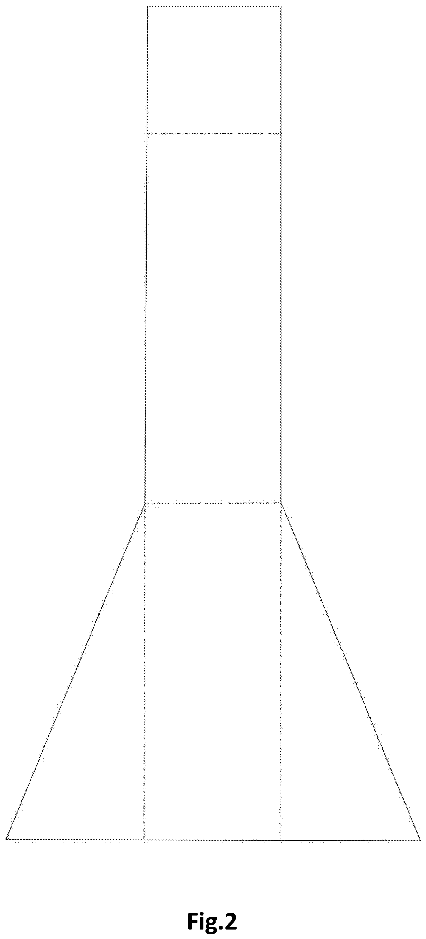

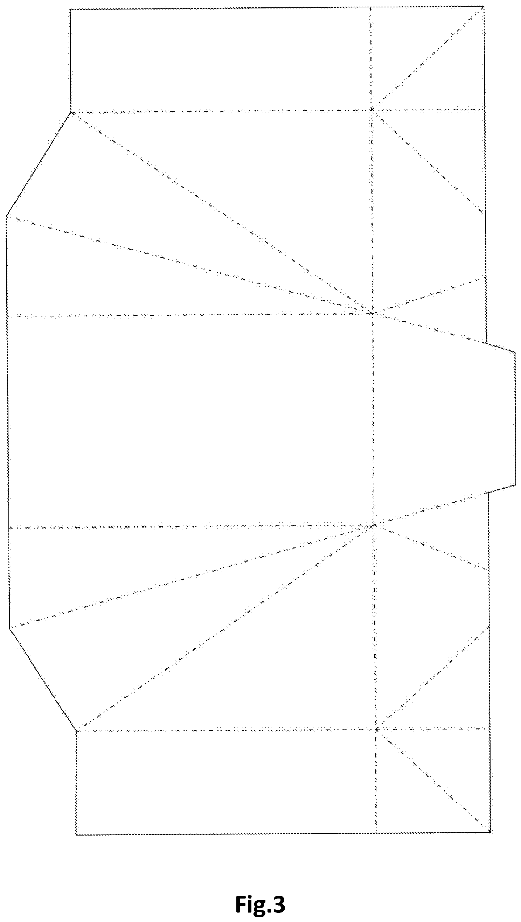

Figures 1-3 show embodiments of suitable patterns for forming the packages according to the invention by folding the paper by the indicated lines. Figures 4a-c show different embodiments of the composition of the packaging material.

### Description of the drawings

Figure 1 shows a parchment paper prepared according to the invention. A sealed package is prepared by folding the paper at the indicated markings. Figure 2 shows in a similar way how a package may be produced by folding the paper. Also figure 3 shows a pattern for folding to form a package. The packages are sealed by adhering neighbouring edges of the parchment paper when folding it. Suitably, the edges are provided with flaps (not shown in the figures) which are adhered to each other, preferably by means of a polysaccharide, for example by applying the edges and/or flaps under heating to improve the adhesiveness and sealing of the formed package. In embodiments containing bio-based binders, the bio-based binder may equally be used as adhering material between the edges and/or flaps. Also, a bio-based glue may equally be used to adhere neighbouring edges and/or flaps.

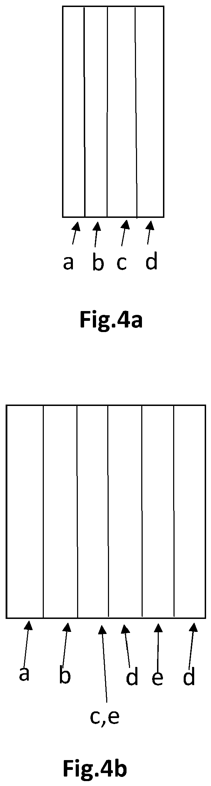

Figure 4a shows a schematic side of the package and the composition thereof according to one embodiment of the invention. Layer a) is a HDPE (High Density Polyethylene), especially HDPE produced from sugar cane, e.g. SGF 9490. This layer is suitably 0.1-1 mm.

Symbol b) in figure 4a represents an air gap and c) represents a polysaccharide coating such as Skalax^{®} (based on hemicellulose which also may be combined with a bio-based binder).

Layer d) is a parchment paper such as Super Perga Opatique WS Parchment^{®}.

Layer d) is exposed to the content of the package, e.g. solid or liquid food, and layer a) is exposed to the atmosphere surrounding the package.

A package composed of only parchment paper and polysaccharide-based composition, i.e. in absence of a polyethylene layer a) as illustrated in figure 4a, can be used for e.g. dry foods or fat foods, for example foods with a wet content lower than 20 wt% or lower than 10 wt%.

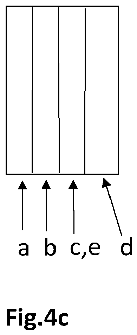

Figure 4c corresponds to figure 4a but wherein the bio-based binder (layer e) is coated on the parchment paper on the side facing away from the enclosed volume. A polysaccharide-based coating c is disposed on the bio-based binder e (in figure 4c, layers e and c are indicated as a joint layer). b) represents an air gap or a vacuum.

In figure 4b, a further parchment paper d) and a bio-based binder e) have been added to the structure shown in figure 4c. The further parchment paper is arranged to have contact with the food stored in the package. As can be noted in figure 4b, the additional bio-based binder (layer e) is disposed between the two parchment papers (layers d). Packages with a layer composition as illustrated in figures 4b and 4c are suitable for wet and/or sour foods, e.g. foods with a water content above 20 wt%. As evident from the invention, the invention may also be implemented without the use of an outer package.

### Example 1

A method (EN 1185-5, an accredited analysis) for overall migration from plastics into aqueous food simulants by cell (one-sided contact) was applied in which 2.25 dm² of a sample was exposed to 100 ml of acetic acid (used as simulant). The measurement uncertainty for the determination of overall migration is ±2 mg/dm².

Sample: Parchment paper + High Density Polyethylene plastic (the parchment paper was placed closest to the food simulant).

### Migration simulant

3 % acetic acid was used as simulant. Report limit: 2 mg/dm².

### Test conditions

20 days, 40°C (20 days according to the test corresponds to 1 year of exposure).

### Results

Overall migration (in mg/dm²sample) was 7.6 and 7.3 respectively (mean result 7.5). The overall migration limit is 10 mg/dm² according to commission regulation (EU) No 10/2011. There were no visible particles in the food simulant after 20 days of migration.

Example 1 shows that the parchment paper without any coating in contact with acidic and/or wet foods (acetic acid being an established simulant in the test) is intact and have good properties as to migration.

### Example 2

Grease proof parchment paper of 65 gram per square meter provided by Nordic Paper was used.

Skalax (hemicellulose-based polysaccharide) from Seelution was used as polysaccharide and BIM BA 85015 X was used as bio-based binder (latex-based SBR-latex).

The coatings were prepared by means of a bench rod coater, a drier with both hot air and IR heater. The parchment paper was coated using a laboratory bench rod coater. The sheet was dried in an oven at 180°C for approximately 1.5 minutes. Before the surface properties were evaluated the sheets were climatized to 23 °C and 50 % relative humidity (RH) for at least one hour.

Hydrophobicity of the surface was evaluated for 300 seconds using Cobb300 (ISO 535) method. For the evaluation of grease resistance, KIT (TAPPI T-559 pm-96) was used. A 1 dm² piece of the coated parchment paper was weighed and compared to a non-coated paper to determine the weight of the coating per square meter.

The COBB300-test was used to determine the quantity of water that can be absorbed by the surface of paper or board in a given time. The samples were evaluated for 300 s with COBB300 (ISO 535) method. Duplicate tests were performed. Grease resistance was measured with KIT-test (TAPPI T-559 pm-96), and reported as a value between 0 to 12. The KIT test solution with highest number that does not penetrate the surface of the substrate is the noted grease resistance (KIT-number).

As Skalax and BIM BA 85015X according to the above were available as already prepared solutions, no further preparation was needed. The samples were coated according to the below in the indicated order by means of a Rod number 2 (color code: red). The following samples were prepared:
Sample 111: Skalax (polysaccharide) 5.5 g/m² coated on parchment paper
Sample 112: Skalax 5.5 g/m² coated on parchment paper; Bim BA 85015X (bio-based binder) 10.6 g/m² coated on the Skalax
Sample 116: Bim BA 85015X (bio-based binder) 8.9 g/m² coated on parchment paper; Skalax 5.3 g/m² coated on the bio-based binder.

**Table 1**

| Sample | Coating weight (g/m²) | Cobb300 (g/m²) | KIT |
|---|---|---|---|
| 111 | 5.2 | 76.6 | 12 |
| 112 | 16.1 | 87.4 | 12 |
| 116 | 14.2 | 62.6 | 12 |

The table shows samples 111, 112, and 116 according to the invention have good Cobb300 and KIT values.

### Example 3 - Oxygen transmission rate

To measure a packaging material's ability to prevent oxygen to pass through it, standard methods ASTM D3985 and ISO 15105-2 were used.

The OTR (oxygen transmission rate) is the steady state rate at which oxygen gas permeates through a film or laminate at specified temperature and relative humidity (Value % RH).

A Biodolomer^{®} available from Gaia Biomaterials, being a granular modified polyester of polylactide and calcium carbonate as filler, was used as bio-based binder.

### Samples

### Sample 111 as above.

Sample 101: Finnfix^{®} 10 Dry (a carboxymethyl cellulose) 20 g/m² coated on the parchment paper on either side thereof. 8 g/m² hydroxyethylcellulose from TCI Europe and 4.6 g Barrisurf LX^{®} slurry (mineral), 43% solids, from Imerys was coated on the Finnfix on both sides of the parchment paper.

Sample 120: as 111 but in addition a Biodolomer^{®} coated on the side of the first parchment paper facing the enclosed volume in an amount of 42 g/m² which biodolomer also formed a coating on a second parchment paper laminated to the first parchment paper on the side thereof facing away from the enclosed volume. The packaging structure counted from the enclosed volume thus comprises the second parchment paper, Biodolomer^{®} coating 42 g/m², first parchment paper, Skalax coating 5.5 g/m².

Sample 101 was prepared from a solution of FinnFix by adding 20 g of Finnfix 10 Dry to 180 g tap water during mixing. The mixture was heated to 50 °C and kept at that temperature. Once Finnfix was fully dissolved, parchment paper was coated using rod number 3 (color code: green). The reverse side of sample 101 was coated with rod number 1 (color code: yellow).

Subsequently a solution was prepared by mixing 184.6 g tap water with 8 g HEC and 4.6 Barrisurf LX slurry. The mixture was heated to 50 °C and kept at that temperature. Once a homogenous mixture was reached, coating using rod number 3 (color code: green) on the formed Finnfix coating was initiated.

The results from the oxygen transmission rate (OTR) show that sample 111 (invention) has very good OTR. The sample 101 (reference) is equal to polyethylene, i.e. regarded as not possible to use as OTR barrier. When looking into the results from the OTR measurement below 10 cc/m² 24 h, materials with those levels are regarded as true oxygen barriers. Sample 120 likewise show excellent results.

**Table 2**

| OTR | Sample 111 | 120 | 101 |
|---|---|---|---|
| cc/m² 24 h | 10 | 1 | >2000 |

### Example 4 - Migration with vegetable oil simulant

The migration tests were performed with iso-octane as simulant mimicking vegetable oil and conducted according to the following:
Contact area sample: 0.45 dm²
Volume iso-octane: 50 ml

The results of the screening after migration into iso-octane are displayed in table 3. The results are expressed in mg/kg foodstuff and/or mg/6 dm², based on the conventional EU food contact ratio of 1 kg of food in contact with 6 dm² of surface area. Calculations are made based on the starting volume of 50 ml simulant.

The LOQ for this analysis is 0.01 mg/kg (ppm) food, therefore components with a concentration lower than the LOQ are not reported in table 3.

**Table 3**

| **RT *(MIN) Component** | **Sample 112 (mg/kg)** | **Sample 116 (mg/kg)** |
|---|---|---|
| 25.1 Unbranched alkane 1 | 0.08 | 0.13 |
| 25.9 Unbranched alkane 2 | 0.07 | 0.16 |
| 26.67 Unbranched alkane 3 | 0.08 | 0.17 |
| 27.41 Unbranched alkane 4 | 0.06 | 0.15 |
| 28.17 Unbranched alkane 5 | 0.04 | 0.11 |
| 28.6 Unbranched alkane 6 | - | 0.03 |
| 29.02 Unbranched alkane 7 | 0.02 | 0.06 |

| | | |
|---|---|---|
| *: RT: retention time in the chromatogram from the gas chromatography mass spectrometry analysis of the extracts. | | |

Table 3 shows the retention time (RT) for unbranched alkanes (different species). As can be noted from table 3, the migration is clearly lower where alkanes originating from the bio-based binder coating has to pass both the Skalax coating and the parchment paper (sample 112) than when the bio-based binder coating is disposed directly on the parchment paper. Table 3 thus shows that the Skalax layer (the polysaccharide) contributes to reduced migration.

### Example 5

A test method to observe the different laminates and their ability to remain intact after exposure to various foodstuffs has been performed. The test was designed as an accelerated test using Arrhenius equation and an elevated temperature whereby the acceleration factor is approximately 50 times. When looking into the different tables with time to failure (breakthrough), all time periods measured should be multiplied by 50 to arrive at corresponding time to failure at room temperature.

The design of the experiment procedure was with glass jar, cap and packaging material as described in the table below. The foodstuff was put on top of the packaging material and the backside of material was observed optically, i.e. visibility of spots at the backside was observed. The observation started after 5 minutes and was ended after 20 hours. No sample in the test was intact after 900 minutes. The temperature was set to 75 °C. The foodstuffs were thus deposited on the surface corresponding to the formed volume according to the invention.

### Meatball test

The meatballs used were Swedish meat balls commercially available from Scan. Sample 103 was prepared as sample 101 but the coatings on the side of the parchment paper facing away (corresponding to the bottom side in this test) from the side at which the foodstuffs (meatballs etc.) were deposited was left uncoated. Sample 121 is a paper laminate with the following layers in the mentioned order seen from the inner side, i.e. the side on which the foodstuff was deposited corresponding to the inner surface of the formed volume of the package: second parchment paper (65 g/m²), Skalax (5.5 g/m²), Biodolomer (42 g/m²), parchment paper (65 g/m²), Skalax (5.5 g/m²). Sample 121 was also used in following graved salmon and pickled cucumber tests.

**Table 4**

| Time (min) | 101 | 103 | 111 | 112 | 116 | 121 |
|---|---|---|---|---|---|---|
| 30 | X | X | X | X | X | X |
| 60 | X | X | X | X | X | X |
| 90 | | | X | X | X | X |
| 120 | | | X | X | X | X |
| 180 | | | X | X | X | X |
| 240 | | | X | X | X | X |
| 900 | | | | | | X |

| | | | | | | |
|---|---|---|---|---|---|---|
| X: No breakthrough of water or fat | | | | | | |

It can be noted from the results that samples 101 and 103 (references) have a breakthrough of moisture after 60 minutes, i.e. material failure. The samples 111, 112, and 116 according to the invention respectively showed breakthroughs after 240 minutes, i.e. material failure. As can be seen from table 4, sample 121 (according to the invention) showed excellent performance compared to all other samples. The differences of the different set of samples are significant. To be noticed is that this is an accelerated test with a factor of 50 and the differences between the samples according to the invention and the references 101 and 103 became quite large.

### Graved salmon test

The salmon was a standard Swedish graved salmon. The salmon is put in a mixture of salt, sugar and oil for 3 days. The species fish is then dried with some paper and cut into pieces.

**Table 5**

| Time (min) | 101 | 103 | 111 | 112 | 116 | 121 |
|---|---|---|---|---|---|---|
| 30 | X | X | X | X | X | X |
| 60 | X | X | X | X | X | X |
| 90 | | | X | X | X | X |
| 120 | | | X | X | X | X |
| 180 | | | X | X | X | X |
| 240 | | | X | X | X | X |
| 900 | | | | | | X |

| | | | | | | |
|---|---|---|---|---|---|---|
| X: No breakthrough of water or fat | | | | | | |

It can be noted from the results that samples 101 and 103 (references) have breakthroughs of moisture after 60 minutes, i.e. material failure. The samples 111, 112, and 116 according to the invention respectively showed breakthroughs after 240 minutes, i.e. material failure. As can be seen from table 5, sample 121 showed excellent performance compared to all other samples. The differences of the different samples are significant. To be noticed is that this is an accelerated test with a factor of 50 and the differences became quite large.

### Cucumber in acetic acid test

This test was performed with cucumber including equal amount of acetic acid by weight. The cucumber used was Felix^{®} Ättiksgurka (pickled cucumber).

**Table 6**

| Time (min) | 101 | 103 | 111 | 112 | 116 | 121 |
|---|---|---|---|---|---|---|
| 30 | X | X | X | X | X | X |
| 60 | X | X | X | X | X | X |
| 90 | | | X | X | X | X |
| 120 | | | X | X | X | X |
| 180 | | | X | X | -¹ | X |
| 240 | | | X | X | | X |
| 900 | | | | | | X |

| | | | | | | |
|---|---|---|---|---|---|---|
| X: No breakthrough of water or fat 1: Sample 116 had some minor defects observed most probably influencing the results | | | | | | |

It can be noted from the results that samples 101 and 103 (references) show breakthroughs of moisture after 60 minutes, i.e. material failure. The samples 111 and 112 according to the invention respectively showed breakthroughs after 240 minutes, i.e. material failure. The sample 116 (invention) was significantly better than samples 101 and 103 (references) but not as good as 111, 112 and 121 (invention). The observation is that samples 111 and 112 are to be regarded as significantly better than sample 116. As can be seen from table 6, sample 121 showed excellent performance compared to all other samples. To be noticed is that this is an accelerated test with a factor of 50 and the differences became quite large.

## Claims

1. Sealed package for food comprising
i) a first parchment paper sealing and forming a volume for storage of food
ii) a polysaccharide-based composition coated
ii.a) on one side of said first parchment paper; or
ii.b) on a bio-based binder coating which is coated directly on one side of said first parchment paper, the bio-based binder coating comprising latex, wax, polylactic acid modified polyester, derivatives and/or mixtures thereof,
wherein the polysaccharide-based composition comprises hemicellulose, microfibrillar cellulose, nanofibrillar cellulose, or mixtures thereof,
wherein the polysaccharide-based composition coating has a thickness ranging from 1 to 20 µm, and
wherein the polysaccharide-based composition is coated on the side of the package facing away from the formed volume.

2. Package according to claim 1, wherein the first parchment paper has been pretreated by a sizing agent selected from a resin and/or a rosin.

3. Package according to any of one of claims 1 to 2, wherein the parchment paper is free from silicone-based and/or fluorine-based compounds.

4. Package according to any one of claims 1 to 3, wherein the polysaccharide-based composition comprises microfibrillar and/or nanofibrillar cellulose.

5. Package according to any one of claims 1 to 4, wherein the bio-based binder is coated directly on the first parchment paper and/or on the coating of the polysaccharide-based composition.

6. Package according to any one of claims 1 to 5, wherein a second parchment paper coated with a bio-based binder is laminated to the first parchment paper on the side of the package closest to the formed volume, wherein the bio-based binder coating is disposed between the first and the second parchment papers.

7. Package according to any one of claims 1 to 6, wherein a polyethylene-based and/or bio-based extrudable polymer package forming an outer package encloses the package according to any one of claims 1 to 6.

8. Package according to claim 7, wherein the outer package is tightly sealed to the package according to any one of claims 1 to 6.

9. Package according to claim 7, wherein a gap between the package according to any one of claims 1 to 6 and the outer package contains air or is vacuumized.

10. Package according to any one of claims 1 to 9, wherein the bio-based binder coating comprises polylactic acid modified polyester.

11. Package according to any one of claims 1 to 10, wherein the bio-based binder coating has a thickness ranging from 5 to 50 µm.

12. Package according to any one of claims 1 to 11, wherein the polysaccharide-based composition does not comprise carboxymethyl cellulose, starch, and hydroxyethyl cellulose.

13. Package according to any one of claims 1 to 5, wherein a second parchment paper is coated with a polysaccharide-based composition, and a bio-based binder is coated on the formed polysaccharide-based composition coating, wherein said second parchment paper being closest to the sealed volume is laminated to the first parchment paper, wherein the coating of the polysaccharide-based composition and the bio-based binder coating are disposed between the first and the second parchment papers.

14. Method of forming a sealed package according to any one of claims 1 to 13, wherein the first parchment paper is coated on one side with a polysaccharide-based composition and optionally a bio-based binder comprising latex, wax, polylactic acid modified polyester, derivatives and/or mixtures thereof, wherein the first parchment paper is folded to form an enclosed volume, wherein adhesive properties of the polysaccharide-based composition are utilized to seal edges of the neighbouring folded sides of said at least first parchment paper to form the sealed package enclosing a volume for food, wherein the polysaccharide-based composition comprises hemicellulose, microfibrillar cellulose, nanofibrillar cellulose, or mixtures thereof, and wherein the polysaccharide-based composition coating has a thickness ranging from 1 to 20 µm.

15. Use of a package according to any one of claims 1 to 13 for food having a water content lower than 20 wt%.

16. Use of a package according to any one of claims 1 to 13 for food having a water content of at least 25 wt%.

17. Use of a package according to any one of claims 1 to 13 for food having a fat content in the range from 40 to 100 wt%.

## Patentansprüche

1. Versiegelte Verpackung für Lebensmittel, umfassend
i) ein erstes Pergamentpapier, das ein Volumen zur Lagerung von Lebensmitteln versiegelt und bildet
ii) eine Zusammensetzung auf Polysaccharidbasis, beschichtet
ii.a) auf einer Seite des ersten Pergamentpapiers; oder
ii.b) auf einer Beschichtung aus Bindemittel auf Biobasis, mit der eine Seite des ersten Pergamentpapiers direkt beschichtet ist, wobei die Beschichtung aus Bindemittel auf Biobasis Latex, Wachs, mit Polymilchsäure modifizierten Polyester, Derivate und/oder Mischungen davon umfasst,
wobei die Zusammensetzung auf Polysaccharidbasis Hemicellulose, mikrofibrilläre Cellulose, nanofibrilläre Cellulose oder Mischungen davon umfasst,
wobei die Beschichtung aus der Zusammensetzung auf Polysaccharidbasis eine Dicke im Bereich von 1 bis 20 µm aufweist, und
wobei die Seite der Verpackung, die dem gebildeten Volumen abgewandt ist, mit der Zusammensetzung auf Polysaccharidbasis beschichtet ist.

2. Verpackung nach Anspruch 1, wobei das erste Pergamentpapier mit einem Leimungsmittel, ausgewählt aus einem Harz und/oder einem Kolophonium, vorbehandelt wurde.

3. Verpackung nach einem der Ansprüche 1 bis 2, wobei das Pergamentpapier frei von Verbindungen auf Silikon- und/oder Fluorbasis ist.

4. Verpackung nach einem der Ansprüche 1 bis 3, wobei die Zusammensetzung auf Polysaccharidbasis mikrofibrilläre und/oder nanofibrilläre Zellulose umfasst.

5. Verpackung nach einem der Ansprüche 1 bis 4, wobei das erste Pergamentpapier und/oder die Beschichtung der Zusammensetzung auf Polysaccharidbasis mit dem Bindemittel auf Biobasis direkt beschichtet ist.

6. Verpackung nach einem der Ansprüche 1 bis 5, wobei ein zweites Pergamentpapier, das mit einem Bindemittel auf Biobasis beschichtet ist, auf das erste Pergamentpapier auf der Seite der Verpackung laminiert ist, die dem gebildeten Volumen am nächsten ist, wobei die Bindemittelbeschichtung auf Biobasis zwischen dem ersten und dem zweiten Pergamentpapier angeordnet ist.

7. Verpackung nach einem der Ansprüche 1 bis 6, wobei eine eine Umverpackung bildende extrudierbare Polymerverpackung auf Polyethylenbasis und/oder Biobasis die Verpackung nach einem der Ansprüche 1 bis 6 umschließt.

8. Verpackung nach Anspruch 7, wobei die Umverpackung dicht mit der Verpackung nach einem der Ansprüche 1 bis 6 versiegelt ist.

9. Verpackung nach Anspruch 7, wobei ein Zwischenraum zwischen der Verpackung nach einem der Ansprüche 1 bis 6 und der Umverpackung Luft enthält oder unter Vakuum steht.

10. Verpackung nach einem der Ansprüche 1 bis 9, wobei die Beschichtung aus Bindemittel auf Biobasis mit Polymilchsäure modifizierten Polyester umfasst.

11. Verpackung nach einem der Ansprüche 1 bis 10, wobei die Beschichtung aus Bindemittel auf Biobasis eine Dicke im Bereich von 5 bis 50 µm aufweist.

12. Verpackung nach einem der Ansprüche 1 bis 11, wobei die Zusammensetzung auf Polysaccharidbasis keine Carboxymethylcellulose, Stärke und Hydroxyethylcellulose umfasst.

13. Verpackung nach einem der Ansprüche 1 bis 5, wobei ein zweites Pergamentpapier mit einer Zusammensetzung auf Polysaccharidbasis beschichtet ist und die gebildete Beschichtung aus der Zusammensetzung auf Polysaccharidbasis mit einem Bindemittel auf Biobasis beschichtet ist, wobei das zweite Pergamentpapier, das dem versiegelten Volumen am nächsten ist, auf das erste Pergamentpapier laminiert ist, wobei die Beschichtung aus der Zusammensetzung auf Polysaccharidbasis und die Beschichtung aus dem Bindemittel auf Biobasis zwischen dem ersten und dem zweiten Pergamentpapier angeordnet sind.

14. Verfahren zum Bilden einer versiegelten Verpackung nach einem der Ansprüche 1 bis 13, wobei das erste Pergamentpapier auf einer Seite mit einer Zusammensetzung auf Polysaccharidbasis und optional einem Bindemittel auf Biobasis beschichtet ist, das Latex, Wachs, mit Polymilchsäure modifizierten Polyester, Derivate und/oder Mischungen davon umfasst, wobei das erste Pergamentpapier gefaltet wird, um ein umschlossenes Volumen zu bilden, wobei Klebeeigenschaften der Zusammensetzung auf Polysaccharidbasis genutzt werden, um Kanten der benachbarten gefalteten Seiten des mindestens ersten Pergamentpapiers zu versiegeln, um die versiegelte Verpackung zu bilden, die ein Volumen für Lebensmittel umschließt, wobei die Zusammensetzung auf Polysaccharidbasis Hemicellulose, mikrofibrilläre Cellulose, nanofibrilläre Cellulose oder Mischungen davon umfasst, und wobei die Beschichtung aus der Zusammensetzung auf Polysaccharidbasis eine Dicke im Bereich von 1 bis 20 µm aufweist.

15. Verwendung einer Verpackung nach einem der Ansprüche 1 bis 13 für Lebensmittel, die einen Wassergehalt von weniger als 20 Gew.-% aufweisen.

16. Verwendung einer Verpackung nach einem der Ansprüche 1 bis 13 für Lebensmittel, die einen Wassergehalt von mindestens 25 Gew.-% aufweisen.

17. Verwendung einer Verpackung nach einem der Ansprüche 1 bis 13 für Lebensmittel, die einen Fettgehalt im Bereich von 40 bis 100 Gew.-% aufweisen.

## Revendications

1. Emballage étanche pour aliments comprenant
i) un premier papier sulfurisé assurant l'étanchéité et formant un volume de conservation des aliments
ii) une composition à base de polysaccharide appliquée
ii.a) sur un côté dudit premier papier sulfurisé ; ou
ii.b) sur un revêtement de liant biosourcé qui est appliqué directement sur un côté dudit premier papier sulfurisé, le revêtement de liant biosourcé comprenant du latex, de la cire, un polyester modifié par l'acide polylactique, des dérivés et/ou des mélanges de ceux-ci,
dans lequel la composition à base de polysaccharide comprend de l'hémicellulose, de la cellulose microfibrillaire, de la cellulose nanofibrillaire, ou des mélanges de celles-ci,
dans lequel le revêtement de composition à base de polysaccharide a une épaisseur allant de 1 à 20 µm, et
dans lequel la composition à base de polysaccharide est appliquée sur le côté de l'emballage opposé au volume formé.

2. Emballage selon la revendication 1, dans lequel le premier papier sulfurisé a été prétraité par un agent d'encollage choisi parmi une résine et/ou une colophane.

3. Emballage selon l'une quelconque des revendications 1 et 2, dans lequel le papier sulfurisé est exempt de composés à base de silicone et/ou à base de fluor.

4. Emballage selon l'une quelconque des revendications 1 à 3, dans lequel la composition à base de polysaccharide comprend de la cellulose microfibrillaire et/ou nanofibrillaire.

5. Emballage selon l'une quelconque des revendications 1 à 4, dans lequel le liant biosourcé est appliqué directement sur le premier papier sulfurisé et/ou sur le revêtement de la composition à base de polysaccharide.

6. Emballage selon l'une quelconque des revendications 1 à 5, dans lequel un second papier sulfurisé revêtu d'un liant biosourcé est stratifié sur le premier papier sulfurisé du côté de l'emballage le plus proche du volume formé, dans lequel le revêtement de liant biosourcé est disposé entre les premier et second papiers sulfurisés.

7. Emballage selon l'une quelconque des revendications 1 à 6, dans lequel un emballage en polymère extrudable à base de polyéthylène et/ou biosourcé formant un emballage extérieur renferme l'emballage selon l'une quelconque des revendications 1 à 6.

8. Emballage selon la revendication 7, dans lequel l'emballage extérieur est hermétiquement scellé à l'emballage selon l'une quelconque des revendications 1 à 6.

9. Emballage selon la revendication 7, dans lequel un espace entre l'emballage selon l'une quelconque des revendications 1 à 6 et l'emballage extérieur contient de l'air ou est mis sous vide.

10. Emballage selon l'une quelconque des revendications 1 à 9, dans lequel le revêtement de liant biosourcé comprend un polyester modifié par l'acide polylactique.

11. Emballage selon l'une quelconque des revendications 1 à 10, dans lequel le revêtement de liant biosourcé a une épaisseur allant de 5 à 50 µm.

12. Emballage selon l'une quelconque des revendications 1 à 11, dans lequel la composition à base de polysaccharide ne comprend pas de carboxyméthylcellulose, d'amidon et d'hydroxyéthylcellulose.

13. Emballage selon l'une quelconque des revendications 1 à 5, dans lequel un second papier sulfurisé est revêtu d'une composition à base de polysaccharide, et un liant biosourcé est appliqué sur le revêtement de composition à base de polysaccharide formé, dans lequel ledit second papier sulfurisé étant le plus proche du volume étanche est stratifié sur le premier papier sulfurisé, dans lequel le revêtement de la composition à base de polysaccharide et le revêtement de liant biosourcé sont disposés entre les premier et second papiers sulfurisés.

14. Procédé de formation d'un emballage étanche selon l'une quelconque des revendications 1 à 13, dans lequel le premier papier sulfurisé est revêtu, sur un côté, d'une composition à base de polysaccharide et éventuellement d'un liant biosourcé comprenant du latex, de la cire, du polyester modifié par l'acide polylactique, des dérivés et/ou des mélanges de ceux-ci, dans lequel le premier papier sulfurisé est plié pour former un volume fermé, dans lequel les propriétés adhésives de la composition à base de polysaccharide sont utilisées pour assurer l'étanchéité des bords des côtés pliés voisins dudit au moins premier papier sulfurisé afin de former l'emballage étanche renfermant un volume pour aliments, dans lequel la composition à base de polysaccharide comprend de l'hémicellulose, de la cellulose microfibrillaire, de la cellulose nanofibrillaire, ou des mélanges de celles-ci, et dans lequel le revêtement de composition à base de polysaccharide a une épaisseur allant de 1 à 20 µm.

15. Utilisation d'un emballage selon l'une quelconque des revendications 1 à 13 pour des aliments ayant une teneur en eau inférieure à 20 % en poids.

16. Utilisation d'un emballage selon l'une quelconque des revendications 1 à 13 pour des aliments ayant une teneur en eau d'au moins 25 % en poids.

17. Utilisation d'un emballage selon l'une quelconque des revendications 1 à 13 pour des aliments ayant une teneur en matières grasses comprise dans la plage allant de 40 à 100 % en poids.
